# EUROPEAN PATENT APPLICATION

(11) **EP 4 644 826 A1**
(43) Date of publication of application: **05.11.2025**
(21) Application number: 24275045.3
(22) Date of filing: 01.05.2024
(51) Int. Cl.: F42B 15/34

(54) **MISSILE**

(71) Applicant: MBDA UK Limited, Stevenage, Hertfordshire SG1 2DA (GB)
(72) Inventor: The designation of the inventor has not yet been filed
(74) Representative: BAE SYSTEMS plc Group IP Department

(57) **Abstract**

A missile is disclosed. The missile comprises an airframe, electronics equipment proximate to a portion of the airframe, a tank for coolant, a coolant channel in fluid communication with the tank, and a pump operable to pump coolant from the tank through the coolant channel. The coolant channel is defined within the airframe and arranged to cool the airframe and the electronics equipment.

## Description

### FIELD OF THE INVENTION

This invention relates to a missile. More particularly, the invention relates to a missile having a cooling system operable to cool both the missile skin and electronic equipment in the missile.

### BACKGROUND

Missiles travelling at hypersonic speeds (speeds greater than Mach 5) require appropriate thermal management systems in order to survive the heating effects arising from interaction with the air flow at such speeds. These heating effects can be sufficiently great to result in failure of traditional materials used in missile manufacture, and accordingly it is often necessary to use more complex and expensive materials that are able to withstand high temperatures. In addition, high-powered electronic equipment present in modern missiles can generate significant heat, and must be actively cooled in order to maintain the electronic equipment within a suitable operating temperature range. Typically, the outer skin of a missile can be used as a heat sink for heat generated by electronic equipment. However, as will be appreciated, this is no longer possible for missiles travelling at hypersonic speeds.

### SUMMARY OF THE INVENTION

In accordance with a first aspect of the present invention there is provided a missile comprising an airframe, electronics equipment proximate to a portion of the airframe, a tank for coolant, a coolant channel in fluid communication with the tank, and a pump operable to pump coolant from the tank through the coolant channel, wherein the coolant channel is defined within the airframe and arranged to cool the airframe and the electronics equipment. By providing an integrated cooling system, operable to cool both the airframe and the electronic equipment, it is possible to construct the missile airframe from an inexpensive material traditionally used for aerospace manufacture, and to continue to use the airframe as a heatsink for electronic equipment, thus obviating the need to have a separate dedicated cooling system for the electronic equipment. Consequently the additional weight and space requirements of a separate cooling system are also removed. The coolant channel may be arranged to cool the entire airframe, or may only cool selected parts of the airframe. For example, it may be that aerodynamic heating effects are limited in some regions of the airframe, and it may not be necessary for these regions to be cooled.

The coolant may be fuel, and the tank may be the fuel tank. If the missile uses a solid fuel, a separate coolant and coolant tank may be needed. However, where the fuel is used as a coolant, no separate coolant is required, thus saving the weight and space of a separate coolant and coolant tank.

The missile may further comprise a propulsion system including a combustion chamber, and the pump may be operable to pump fuel from the fuel tank to the combustion chamber via the coolant channels. The coolant channel may be arranged such that fuel passes directly from the coolant channel to the combustion chamber. Alternatively, the missile may comprise an additional tank between the coolant channel and the combustion chamber, and the pump may be operable to pump fuel from the fuel tank to the combustion chamber via the coolant channel and the additional tank. Providing an additional tank enables, for example, a high cooling power to be achieved even when the demand for fuel from the propulsion system is low.

The coolant channel may be arranged such that, after passing through the coolant channel, coolant is expelled from a coolant channel outlet into a missile exhaust. For example, where the coolant is not fuel, coolant that has absorbed heat from the airframe and electronic system can be expelled from the missile, thus removing excess heat.

The coolant channel may follow a meandering path within the airframe. The coolant channel may for example follow a helical path. The pitch of the helical path may be between 10 mm and 1000 mm. The pitch of the helical path may be between 20 mm and 100 mm. The coolant channel may follow a serpentine path within the airframe. The coolant channel may follow a serpentine path in some sections, and a helical path in other sections. The path may be arranged such that, within those parts of the airframe that are to be cooled, no part of the airframe is more than a selected distance from the coolant channel. The selected distance may for example be between 10 mm and 1000 mm; or between 20 mm and 100 mm. A serpentine path may for example form a series of 'U' shapes, with alternating 'U's being inverted with respect to one another. The coolant channel may follow a path that is both serpentine and helical.

The coolant channel may have a diameter of approximately half the thickness of the airframe. For example, the airframe may be 8 mm thick, and the diameter of the coolant channel may be 4 mm. The coolant channel may have a constant diameter along its length. The coolant channel may have a diameter that varies in different sections.

The spacing between different segments of the meandering path may be relatively closer in the portion of the airframe, and relatively further apart in other parts of the airframe. For example, where the meandering path is a serpentine path forming a series of 'U' shapes, with alternating 'U's being inverted with respect to one another, the parallel segments of the 'U's may be spaced relatively closer together in the portion of the airframe, and relatively further apart in other parts of the airframe.

The airframe may comprise a body tube, and the coolant channel may follow a helical path around the body tube.

The portion of the airframe may be a section of the body tube, and the pitch of the helical path may be relatively smaller in the section of the body tube, and relatively larger in other parts of the body tube.

The portion of the airframe may be a section of the body tube and the helical path may have a constant pitch, and there may be a further coolant channel in communication with the tank defined within the body tube, and the further coolant channel may follow a serpentine path in the section of the body tube. In this way electronic equipment can be cooled by the further coolant channel, whilst global airframe cooling can be provided by the coolant channel following a helical path. The coolant channel and the further coolant channel may be connected such that a single pump is operable to pump coolant through both the coolant channel and the further coolant channel. This avoids the further space and weight requirements of a further pump. The coolant channel and the further coolant channel may be connected in parallel. The coolant channel and the further coolant channel may alternatively not be connected, and there may be a further pump operable to pump coolant through the further coolant channel. In this way the cooling power provided to the electronic equipment can be independent of the cooling power provided to the airframe.

The further coolant channel may be located in the body tube inwardly of the coolant channel. This enables the further coolant channel to more effectively cool the electronic equipment inside the body tube.

The thickness of the body tube may be greater in the section of the body tube than in other parts of the body tube. This provides additional space to accommodate the further coolant channel. In addition, the greater mass of body tube material present in the section enables these parts of the body tube to function more effectively as a heat sink for electronic equipment.

The coolant channel may have a relatively smaller diameter in the portion of the airframe, and a relatively larger diameter in other parts of the airframe.

The coolant channel walls may have relatively greater surface roughness in the portion of the airframe, and relatively lesser surface roughness in other parts of the airframe. Rougher surfaces result in increased turbulence in the coolant, which in turn results in greater heat transfer. Thus, by providing increased surface roughness in the portion of the airframe, increase heat transfer is effected near the electronic equipment.

Protrusions may be formed on the coolant channel walls in the portion of the airframe, such that the coolant channel walls have a relatively greater surface areas in the portion of the airframe, and a relatively lesser surface area in other parts of the airframe. The protrusions may be cooling fins. The protrusions increase the wetted surface area of the airframe, thus resulting in increased heat transfer in the portion of the airframe.

### BRIEF DESCRIPTION OF THE DRAWINGS

Embodiments of the invention will now be described by way of example only and with reference to the accompanying drawings, of which:
Figure 1a is a schematic illustration of a missile according to a first embodiment of the invention;
Figure 1b is a schematic illustration showing the cooling system of the missile of Figure 1a in greater detail;
Figure 1c shows an enlarged schematic view of a part of the cooling system shown in Figure 1b;
Figure 1d is a schematic view of a part of a coolant channel of the cooling system of Figure 1b;
Figure 2 is a schematic illustration of a missile according to a second embodiment of the invention;
Figure 3 is a schematic illustration of a missile according to a third embodiment of the invention;
Figures 4a and 4b are schematic illustrations of a body tube for the missile of Figure 1; and
Figures 5a and 5b are schematic illustrations of an alternative body tube for the missile of Figure 1.

### DETAILED DESCRIPTION

Embodiments of the present invention relate generally to missiles, and particularly to hypersonic missiles, for which it can be to provide some cooling both to the airframe, which may be heated as a result of aerodynamic heating at high speeds, and to electronics equipment within the missile, which may generate significant heat as a result of their operation, but which must also be maintained within an suitable operating temperature range if they are to function properly.

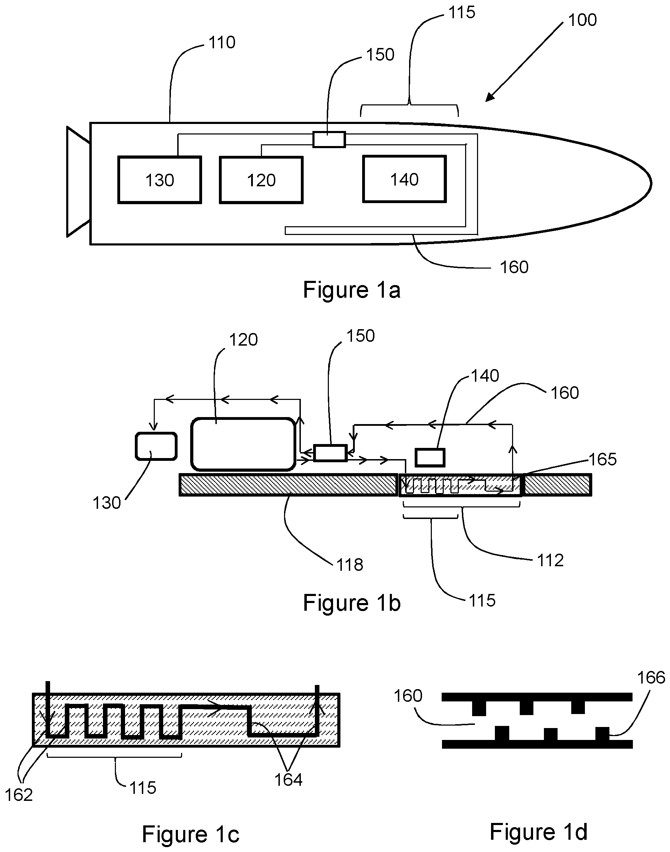

Figures 1a, 1b, 1c and 1d schematically illustrate a missile 100 according to a first embodiment of the invention. Missile 100 comprises airframe 110, fuel tank 120, combustion chamber 130, and electronics equipment 140 proximate to a portion of the airframe, the portion being generally indicated at reference numeral 115. A channel 160 is in fluid communication with the tank, and pump 150 is operable to pump fuel from the tank through the channel 160. As is shown more clearly in Figure 1b, a part of the channel is defined within the airframe. This part is generally indicated at reference numeral 165.

Combustion chamber 130 is part of a propulsion system (other components of which are not illustrated) used to propel missile 100 at speeds of up to or greater than Mach 5. The propulsion system may for example be a ramjet propulsion system, or a hybrid ramjet/rocket propulsion system. The fuel used for missile 100 is liquid hydrogen, which, since it is stored at relatively low temperatures in the fuel tank, can be operate as a coolant both for the airframe and for the electronics equipment 140. In operation, fuel is pumped from the fuel tank through the channel 160 and then into the combustion chamber 130. In this way heat absorbed from the airframe and electronics equipment is expelled from the missile. Channel 160 is thus also referred to as a coolant channel.

The coolant channel follows a path arranged to cool the airframe. As the cold fuel flows through the channel, it will have a cooling effect on the airframe around it. The cooling will affect a limited part of the airframe in proximity to the coolant channel. For example, as is schematically illustrated in Figure 1b, portion 112 of the airframe experiences cooling as a result of the coolant channel passing there through, whereas portion 118 does not experience cooling. So as to cool a substantial part of the airframe, the coolant channel can follow a meandering path arranged so that none of that part of the airframe to be cooled is more than a selected distance from the coolant channel. The selected distance will depend on a number of different factors, including external heating rate, the materials used in construction of the airframe, and structural loading in the part of the airframe through which the coolant channel passes.

The coolant channel in the present example is arranged to follow a path arranged so that none of that part of the airframe to be cooled is more than 50 mm from the coolant channel. Typically, the coolant channel diameter may be around a half of the thickness of the airframe. In the present example, the airframe is 8 mm thick, and fabricated from aluminium, and the coolant channel has a diameter of 4 mm within the airframe. The axis of the coolant channel is located in the middle of the thickness of the airframe. So as to promote effective heat exchange between the airframe and the hydrogen fuel, the internal surface of the coolant channel is roughened.

The coolant channel is also arranged to cool the electronics equipment 140. The electronics equipment is likely to generate significant heat when operating during missile flight, and this heat must be managed so as to maintain the temperature of the electronics equipment within a suitable operating range. Cooling of the electronics equipment is achieved via the airframe, the airframe being cooled by the coolant in the coolant channel, and the airframe proximate to the electronics equipment cooling the electronics equipment. As a consequence, there is a greater requirement for cooling power proximate to the electronics equipment 140. In this region, the coolant channel is adapted to provide a greater cooling power. As in other parts of the airframe, proximate to the electronics equipment 140, the coolant channel can follow a meandering path arranged so that none of that part of the airframe to be cooled is more than a selected distance from the coolant channel. The selected distance proximate to the electronics is lower than that in other parts of the airframe, thereby increasing the wetted area of the airframe and increasing the cooling power. The selected distance close to the electronic equipment may be chosen in dependence on the heat expected to be generated by the electronic equipment, in addition to those other factors set out above.

As is indicated schematically at 115, proximate to the electronics equipment follows a path arranged such that segments of the channel are packed closer together, to enable a shorter selected distance. Thus, as is shown in Figure 1c, segments 162 of channel 160, which are in region 115, are spaced more closely than segments 164, which are outside of region 115. Whilst the selected distance outside of region 115 is 50mm, and segments 164 are spaced apart by 100 mm; the selected distance within region 115 is 25 mm, and segments 162 are spaced apart by 50 mm. The closer spacing of the segments results in greater cooling power being provided in region 115 than outside of it.

In some cases it may be that the diameter of the coolant channel in region 115 is reduced to enable the channel segments to be packed more closely together, a constraint on the closeness of the packing arising from the necessity to maintain the mechanical strength of the airframe. The cooling power in region 115 can also be increased by increasing the roughness of the walls of the channel. Increasing the roughness of the walls of the channel increases the turbulence of the flow, again enabling greater transfer of heat from the airframe in region 115. The cooling power in region 115 can also be increased by forming protrusions on the channel walls, the protrusions having the effect of increasing the surface area of the airframe in contact with the coolant, and therefore enabling greater transfer of heat from the airframe. Figure 1d schematically illustrates coolant channel 160 with protrusions 166 extending into the channel.

The position of the channel within the depth of the airframe may also be changed in the region 115 so as to increase cooling power on the internal side of the airframe. Increased cooling power on the internal side of the airframe will assist in providing cooling to electronics equipment. Whereas, outside of region 115, the channel may be positioned centrally with respect to the depth of the airframe, with its axis at a distance of 4 mm from both the internal and external surfaces of the airframe, within region 115, the axis of the channel can be positioned closer to the interior surface of the airframe. For example, with the diameter of the channel reduced, the axis of the channel can be placed at a distance of 2 mm from the interior surface of the airframe, so that a greater cooling power is provided to the electronics equipment on the inside of the airframe.

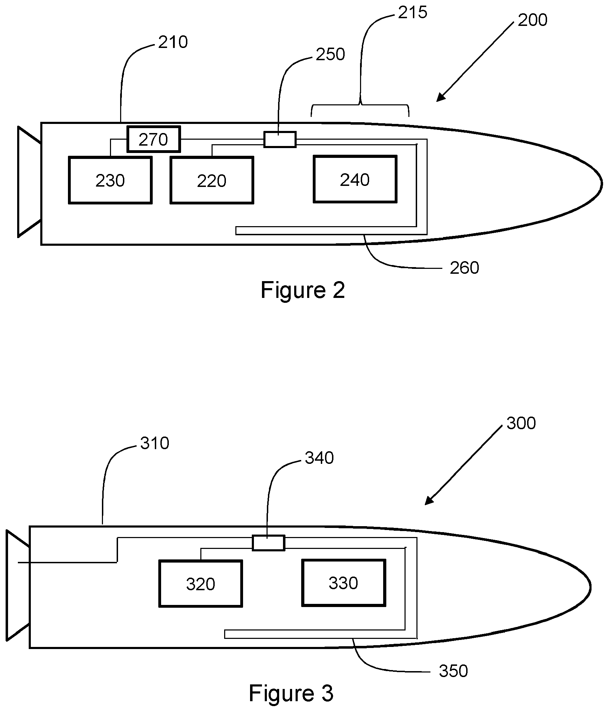

Figure 2 is a schematic illustration of a missile 200 according to a second embodiment of the invention. Missile 200 comprises an airframe 210, a fuel tank 220, combustion chamber 230, electronics equipment 240, and pump 250 operable to pump fuel from tank 230 around coolant channel 260. These features are similar to those described above with regard to missile 100 illustrated in Figure 1, and are not described further. Missile 200 differs from missile 100 in that the coolant channel outlet feeds into an additional tank 270 before being passed to the combustion chamber 230. This enables the rate of flow of fuel into the combustion chamber to be more independent of the rate of flow of fuel around the coolant channel, so that, for example, a high rate of cooling can be achieved using a high rate of flow of fuel through coolant channel 260, whilst maintaining a relatively low thrust requiring only a small amount of fuel input to the combustion chamber.

Figure 3 is a schematic illustration of missile 300 according to a third embodiment of the invention. Missile 300 differs from missiles 100 and 200 in that missile 300 uses a coolant other than the missile fuel. Thus coolant tank 320 is independent of the missile fuel and propulsion system. In a similar way to missiles 100 and 200, missile 300 comprises an airframe 310, and electronics equipment 330, both of which require cooling. Coolant from coolant tank 320 is pumped through coolant channel 350 by pump 340 and provides cooling to the electronics equipment and airframe in a similar way to that described above with respect to missile 100. The outlet of the coolant channel 350, however, exhausts the coolant to the external environment so as to expel absorbed heat. Such an arrangement may be appropriate for missiles having a rocket propulsion system operating with solid propellant.

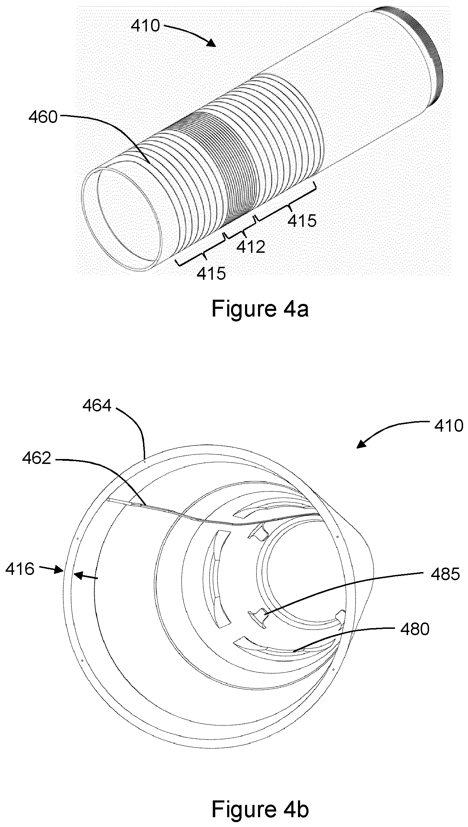

Figures 4a and 4b illustrate a body tube 410 forming a part of a missile airframe. Body tube 410 can be used in a missile similar to those described above with reference to Figures 1 to 3, and is shown in Figure 4a in part cut-away view to illustrate a coolant channel 460 located in the body tube. The body tube 410 can be made from, for example, aluminium, or titanium, alloys thereof, or steel. Channel 460 is located midway through the thickness of the body tube 410. In this example the meandering path followed by the coolant channel forms a helical coil around the body tube. The helical coil extends for the full length of the body tube 460, with only a part of the coil visible in the cut-away section of Figure 4a.

In regions of the body tube proximate to heat-generating electronic equipment, the pitch of the helical coil is reduced so as to increase the cooling power in those regions. Thus, in region 412, the pitch of the helical coil is reduced compared to the pitch of the helical coil in regions 415. Adjacent segments of the helical coil are correspondingly closer together in region 412 than in regions 415. For example, the segments in region 412 may be separated by a distance of 50 mm along the longitudinal axis of the body tube in region 412, whilst the segments of the helical coil may be separated by a distance of 100 mm along the longitudinal axis of the body tube in regions 415 (in other words, the pitch of the helical coil may be 50 mm in region 412, and 100 mm in regions 415). In use, it will be appreciated that electronic equipment may be mounted to the body tube 410 in region 412.

Figure 4b is an illustration of a view through the body tube 410. The thickness of body tube 410 is indicated by arrows 416. An inlet 464 to the coolant channel 460 (not shown in Figure 4b) is positioned on the edge of the body tube. An outlet from the coolant channel 460 (not shown in Figure 4b) feeds into a bypass pipe 462 formed internally of the body tube 410. Both the inlet and the outlet from the bypass pipe are thus at the same end of the body tube 410. Within the body tube are provided various mounting surfaces 480 and protrusions 485 to facilitate the attachment of equipment, such as electronic equipment, to the inside of the body tube. The mounting surfaces 480 also represent thicker areas of the airframe, which can perform more effectively as heat sinks for electronic equipment.

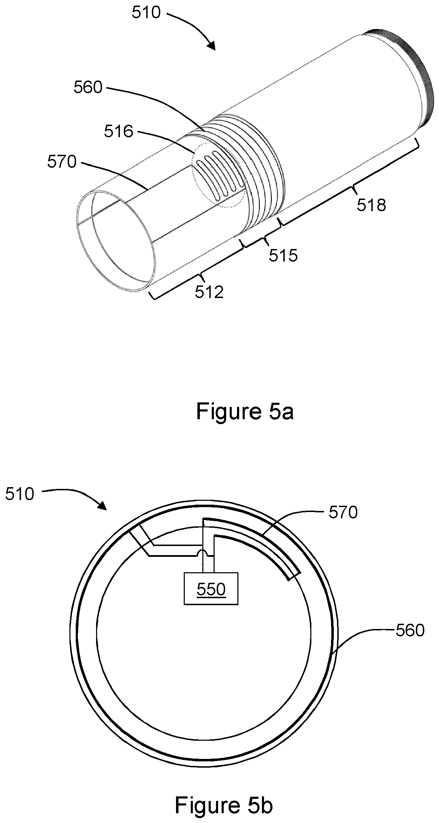

Figures 5a and 5b illustrate a body tube 510 forming a part of a missile airframe. Body tube 510 can be used in a missile similar to those described above with reference to Figures 1 to 3, and is shown in part cut-away view in Figure 5a to illustrate a further coolant channel 570 located within the body tube. Figure 5a has two separate cut-away views, and shows the outer surface of the body tube 510 in region 518, a cut-away section 515 showing the configuration of a coolant channel 560, and a further cut-away section 512 showing the configuration of a further, inner coolant channel 570. Further coolant channel 570 follows a meandering path that has a serpentine form in section 516 of the body tube, and outside of section 516 follows a path that leads directly to an inlet and outlet from the body tube so as to connect with a pump.

In its serpentine section, coolant channel 570 follows a path that repeats a number of U-shaped segments, with the orientation of each segment alternating by 180° so as to form a continuous path. As shown, the 'U's are oriented circumferentially on the body tube, it being appreciated that any other orientation may also be used. The segments may be arranged so that the parallel sections of the path in region 516 are separated by 50 mm. Further coolant channel 570 provides significant cooling power only in section 516 where it follows a meandering path.

Coolant channel 560 is positioned outwardly in the body tube relative to further coolant channel 570, as shown schematically in Figure 5b. Channel 560 follows a meandering path which in this example is a helical path through the body tube 510. The helical path has a constant pitch of 100 mm and extends along the length of the body tube 510, so that the coolant channel 560 provides uniform cooling to the body tube 510. The position of channel 560 in the thickness of the body tube may change at locations where it is close to the channel 570, so as to accommodate both channels within the thickness of the body tube. Both channels 560 and 570 have a diameter of 2 mm in the present example, with channel 560 being located in the centre of the thickness of the body tube away from channel 570. The axis of channel 570 is positioned at a distance of 2 mm away from the interior surface of the body tube, and, near to channel 570, channel 560 may divert such that its axis is a distance of 2 mm from the outer surface of the body tube. Optionally, the body tube 510 can be made thicker in the region of further coolant channel 570, and generally in section 512, where the thickness of the body tube must accommodate two channels, rather than only one. As with mounting surfaces 480, the thicker body tube can also act more effectively as a heat sink.

Coolant channel 560 and further coolant channel 570 are connected in parallel to a pump 550. Similar to the pump 130 of missile 100 described above, pump 550 is operable to pump fuel through the coolant channel 560 and the further coolant channel 570. After passing through the coolant channels, the fuel returns to the pump and is passed to the propulsion system.

Further coolant channel 570 is included to provide additional cooling power to the specific section 516 of the body tube. In use in the missile, section 516 has electronic equipment (not shown in Figures 5a and 5b) requiring cooling mounted thereto on the inside of the body tube. Further coolant channel 570 provides cooling to the electronic equipment, so as to absorb heat generated by use of the electronic equipment. Coolant channel 560 provides cooling to the body tube, so as to mitigate the effects of heating on the body tube arising from high speed flight.

The coolant channels in the airframe can be manufactured in a number of different known ways. For example, additive manufacturing techniques, or subsurface friction stir welding can be used. Use of additive manufacturing to make the coolant channel also enables the roughness of the walls of the channel to be varied, so that, for example, the wall roughness can be increased in the portion of the airframe proximate to the electronics equipment. Additive manufacturing techniques may also facilitate other variations in the coolant channel to support increased cooling power in different parts of the channel.

Whilst a number of specific embodiments have been described above, it will be noted that variations and modifications to the above described embodiments will be possible and apparent to those skilled in the art. For example, those skilled in the art will appreciate that the relative positions of the channels within the airframe thickness can vary, and that different diameters of channel can be used. Such parameters will be chosen in dependence on the particular platform to which the cooling is to be applied. Moreover, it will be noted that many different configurations of path may be followed by the channels in addition to those described above. Whilst it has been described in the above for the path to be serpentine or helical, it will be appreciated that there is no need for the channel to follow a regular path, and the path may also be adjusted for example to provide greater cooling to different areas of the airframe which may be subjected to a greater amount of aerodynamic heating. Moreover, it may be that more than one channel is used to cool the airframe, or that three or more channels are connected in parallel so as to provide cooling across a wider area.

Whilst, in the above, it has been described to use liquid hydrogen as a fuel, it will be noted that many other liquid fuels may be used with the coolant channels to provide a suitable cooling effect. Traditional fuels, for example hydrocarbon-based fuels such as JP-10, whilst in storage prior to use in a propulsion system, will still be significantly cooler than the temperatures to which the airframe might be heated during high speed flight, and sufficiently cool to maintain electronic equipment in a suitable operating temperature range.

Finally, it should be clearly understood that any feature described above in relation to any one embodiment may be used alone, or in combination with other features described, and may also be used in combination with one or more features of any other of the embodiments, or any combination of any other of the embodiments.

## Claims

1. A missile comprising an airframe, electronics equipment proximate to a portion of the airframe, a tank for coolant, a coolant channel in fluid communication with the tank, and a pump operable to pump coolant from the tank through the coolant channel, wherein the coolant channel is defined within the airframe and arranged to cool the airframe and the electronics equipment.

2. The missile of claim 1, wherein the coolant is fuel, and the tank is the fuel tank.

3. The missile of claim 2, wherein the missile further comprises a propulsion system including a combustion chamber, and the pump is operable to pump fuel from the fuel tank to the combustion chamber via the coolant channels.

4. The missile of claim 3, wherein the missile comprises an additional tank between the coolant channel and the combustion chamber, and the pump is operable to pump fuel from the fuel tank to the combustion chamber via the coolant channel and the additional tank.

5. The missile of claim 1, wherein the coolant channel is arranged such that, after passing through the coolant channel, coolant is expelled from a coolant channel outlet into a missile exhaust.

6. The missile of any preceding claim, wherein the coolant channel follows a meandering path within the airframe.

7. The missile of claim 6, wherein the spacing between different segments of the meandering path is relatively closer in the portion of the airframe, and relatively further apart in other parts of the airframe.

8. The missile of any one of claims 1 to 5, wherein the airframe comprises a body tube, and wherein the coolant channel follows a helical path around the body tube.

9. The missile of claim 8, wherein the portion of the airframe is a section of the body tube, and wherein the pitch of the helical path is relatively smaller in the section of the body tube, and relatively larger in other parts of the body tube.

10. The missile of claim 8, wherein the portion of the airframe is a section of the body tube and the helical path has a constant pitch, and wherein a further coolant channel in communication with the tank is defined within the body tube, and the further coolant channel following a serpentine path in the section of the body tube.

11. The missile of claim 10, wherein the further coolant channel is located in the body tube inwardly of the coolant channel.

12. The missile of claim 10 or claim 11, wherein the thickness of the body tube is greater in the section of the body tube than in other parts of the body tube.

13. The missile of any preceding claim, wherein the coolant channel has a relatively smaller diameter in the portion of the airframe, and a relatively larger diameter in other parts of the airframe.

14. The missile of any preceding claim, wherein the coolant channel walls have relatively greater surface roughness in the portion of the airframe, and relatively lesser surface roughness in other parts of the airframe.

15. The missile of any preceding claim, wherein protrusions are formed on the coolant channel walls in the portion of the airframe, such that the coolant channel walls have a relatively greater surface areas in the portion of the airframe, and a relatively lesser surface area in other parts of the airframe.
